# EUROPÄISCHE PATENTSCHRIFT

(11) **EP 4 154 231 B1**
(45) Veröffentlichungstag und Bekanntmachung des Hinweises auf die Patenterteilung: **02.04.2025**
(21) Anmeldenummer: 21720744.8
(22) Anmeldetag: 21.04.2021
(51) Int. Cl.: G08B 13/18

(54) **SYSTEM ZUR WARNUNG VOR EINDRINGEN IN EIN SPERRGEBIET**
SYSTEM FOR WARNING ABOUT ENTERING A RESTRICTED AREA
SYSTÈME D'AVERTISSEMENT CONCERNANT L'ENTRÉE D'UNE ZONE LIMITÉE

(30) Priorität: 22.05.2020 DE 102020113810
(43) Veröffentlichungstag der Anmeldung: 29.03.2023
(73) Patentinhaber: Pfanner Schutzbekleidung GmbH, 6842 Koblach (AT)
(72) Erfinder: PFANNER, Anton, 6845 Hohenems (AT)
(74) Vertreter: Schumacher & Willsau
(86) Internationale Anmeldenummer: PCT/EP2021/060379
(87) Internationale Veröffentlichungsnummer: WO 2021/233636

(56) Entgegenhaltungen:
- CN-U- 209 625 385
- JP-A- 2008 065 720
- US-A- 5 463 595
- US-A- 5 970 155
- US-A1- 2008 169 922

## Beschreibung

Die Erfindung betrifft ein Warnsystem, insbesondere zur Unterstützung der Sicherheit bei Forstarbeiten.

Werden beispielsweise Baumfällarbeiten in einem Wald ausgeführt, so ist es erforderlich, das Gebiet, in dem die Arbeiten stattfinden, weiträumig abzusperren. Hierdurch soll verhindert werden, dass insbesondere unbeteiligte Personen durch herabfallende Äste oder gar umstürzende Bäume verletzt werden. Nicht immer ist aber davon auszugehen, dass jegliche Personen die Absperrungen des zu errichtenden Sperrgebiets respektieren, so dass trotz Absperrungen Personen in Gefahrenzonen geraten. Ebenfalls kommt es vor, dass Personen die Absperrungen übersehen und aus diesem Grund gefährdet werden.

Es wäre daher erwünscht, Personen eine zusätzliche Möglichkeit zu bieten, ihren Eintritt in ein Sperrgebiet zu bemerken und ferner einer verantwortlichen Person zu signalisieren, dass der Eintritt in ein Sperrgebiet durch eine nicht autorisierte Person bevorsteht oder bereits stattgefunden hat.

In dem Dokument US 5,463,595 ist eine mobile Einheit offenbart, welche geeignet ist, Objekte zu erfassen, und welcher verschiedene Signalisierungsarten zur Verfügung stehen.

Das Dokument US 5,970,155 offenbart eine in einen Gehörschutz integrierte Kommunikationseinheit.

Das Dokument US 2008/0169922 A1 offenbart ein Überwachungssystem mit Bewegungssensor und GPS-Modul.

Der Erfindung liegt die Aufgabe zugrunde, ein Warnsystem zur Verfügung zu stellen, welches den Eintritt von Personen in ein Sperrgebiet zuverlässiger verhindert sowie einer verantwortlichen Person signalisiert, dass sich möglicherweise eine unautorisierte Person in einem Sperrgebiet befindet.

Diese Aufgabe wird mit den Merkmalen des unabhängigen Anspruchs gelöst.

Vorteilhafte Ausführungsformen der Erfindung sind in den abhängigen Ansprüchen angegeben.

Die Erfindung besteht in einem Warnsystem mit mindestens einer mobilen Hinweiszeicheneinheit, welche optisch eine Grenze zu einem Sperrgebiet kennzeichnet, wobei die Hinweiszeicheneinheit mindestens einen Bewegungssensor aufweist, welcher Bewegungen von Objekten in der Umgebung der Hinweiszeicheneinheit erfasst, und wobei die Hinweiszeicheneinheit mindestens eine Signalvorrichtung aufweist, welche geeignet ist, ein optisches und/oder akustisches Signal auszugeben, wenn der Bewegungssensor eine Bewegung eines Objekts in der Umgebung der Hinweiszeicheneinheit erfasst hat, und einer Zentraleinheit, die geeignet ist, ein über Funk von der mindestens einen Hinweiszeicheneinheit gesendetes Signal zu empfangen und hierauf einen Hinweis an einen Nutzer der Zentraleinheit auszugeben, wobei durch die Hinweiszeicheneinheit erfassbar ist, ob das Objekt die Grenze zu dem Sperrgebiet überschreitet oder überschritten hat, und wobei das Signal in Abhängigkeit davon veränderbar ist, ob das Objekt die Grenze zu dem Sperrgebiet überschreitet oder überschritten hat. Die genannten Objekte sind in erster Linie Personen beziehungsweise Personengruppen. Es kann sich jedoch auch um sonstige Objekte handeln, wie zum Beispiel Tiere, bemannte oder unbemannte Fahrzeuge sowie bemannte oder unbemannte Flugzeuge. Insbesondere wenn also eine Person unbeabsichtigt in ein Sperrgebiet eintritt, so wird diese durch ein optisches und/oder akustisches Signal gewarnt. Mit großer Wahrscheinlichkeit wird diese Person dann den Rückzug antreten. Parallel wird einer Zentraleinheit über Funk, beispielsweise über Langwellenfunk, signalisiert, dass ein Eintritt in das Sperrgebiet stattgefunden hat. Gleichermaßen kann dann auch wieder signalisiert werden, wenn sich die Person aus dem Sperrgebiet entfernt hat. Auch bei beabsichtigtem Eintritt in das Sperrgebiet kann das System wirksam sein. Die akustische und/oder die optische Signalisierung kann derart abschreckend sein, dass ein absichtlicher Versuch, das Sperrgebiet zu betreten, abgebrochen wird, vergleichbar zur Wirkung einer Alarmanlage an einem Wohnhaus. Wird ferner an die Zentraleinheit signalisiert, dass eine Person in das Sperrgebiet eingetreten ist, und der Nutzer der Zentraleinheit stellt fest, dass kein darauffolgender Austritt aus dem Sperrgebiet stattfindet, so können die gefährlichen Forstarbeiten temporär eingestellt werden, und die Person kann gesucht und auf dieser Grundlage in Sicherheit gebracht werden. Auch wenn das Warnsystem mit seiner Signalvorrichtung geeignet ist, ein optisches und/oder akustisches Signal auszugeben, kann es mitunter erwünscht sein, dass eine Signalausgabe nicht erfolgt, obwohl eine Bewegung eines Objekts in der Umgebung der Hinweiszeicheneinheit erfasst wird. Anders gesagt, der Nutzer des Warnsystems könnte unter Umständen wünschen, dass nur ein Signal an die Zentraleinheit gesendet wird. Die Person, die sich der Hinweiszeicheneinheit nähert, erfährt so nicht, dass sie erfasst wurde. Dies kann beispielsweise bei der Festnahme von Kriminellen helfen. Ferner kann es im privaten Bereich unerwünscht sein, störende optische oder akustische Signale im Bereich von Hinweiszeicheneinheiten zu erzeugen. Die Hinweiszeicheneinheit kann auch so weitergebildet sein, dass Schilder oder Transparente, die von der Hinweiszeicheneinheit gehalten werden, mit einer Beleuchtung ausgestattet sind. Sie können zum Beispiel durch eine LED-Umrandung erhellt werden. Diese LED-Umrandung kann permanent oder blinkend betrieben werden, wobei die Betriebsart - permanent oder blinkend - davon abhängen kann, ob ein Objekt erfasst wurde. Die optischen Signale im Bereich der Hinweiszeicheneinheit können auch Bewegungen der Komponenten der Hinweiszeicheneinheit sein, beispielsweise Bewegungen von Schildern und/oder Bannern. Die Person, die sich der Hinweiszeicheneinheit nähert, kann durch den Bewegungssensor also frühzeitig alarmiert werden, so dass es erst gar nicht zu einem Eintritt in das Sperrgebiet kommt. Prinzipiell ist in diesem Fall eine Signalisierung an die Zentraleinheit entbehrlich. Sobald festgestellt wird, dass die Person die Grenze zu dem Grenzgebiet überschreitet oder bereits überschritten hat, ist zwingend ein Signal an die Zentraleinheit zu senden. Ferner kann die Person durch Veränderung der Art des optischen und/oder akustischen Signals darauf aufmerksam gemacht werden, dass nun nicht nur eine Warnung vorliegt, sondern dass sich die Person nun tatsächlich im Sperrgebiet und somit in Lebensgefahr befindet.

Nützlicherweise ist vorgesehen, dass die Zentraleinheit mit einer Kommunikationseinheit koppelbar ist, welche in einem Gehörschutz des Nutzers angeordnet ist, so dass die Hinweise über den Gehörschutz an den Nutzer ausgegeben werden können. Der Nutzer der Zentraleinheit wird in der Regel ein Forstarbeiter sein, der alleine arbeitet, der mehreren anderen Forstarbeitern vorgesetzt ist oder der mit der speziellen Aufgabe betraut ist, das Warnsystem zu betreiben und zu nutzen. Da bei Forstarbeiten häufig ein Gehörschutz getragen wird, sei es ein isolierter Gehörschutz oder ein Gehörschutz, der mit einem Schutzhelm verbunden ist, ist es möglicherweise schwierig, den Nutzer der Zentraleinheit auf ein durch die Zentraleinheit empfangenes Signal aufmerksam zu machen, nämlich wenn es sich um ein akustisches Signal handelt. Dem wird Abhilfe dadurch geschaffen, dass der Gehörschutz mit einer Kommunikationseinrichtung ausgestattet ist, welche durch die Zentraleinheit aktiviert wird. Der Nutzer kann ein spezielles Signal über den Gehörschutz mit der Kommunikationseinheit vernehmen oder auch eine gesprochene Nachricht, wie "Person in Sperrgebiet". Nützlicherweise erfolgt die Kommunikation der Zentraleinheit mit der Kommunikationseinrichtung des Gehörschutzes drahtlos, vorzugsweise über Bluetooth. Bluetoothfähige Gehörschutzkomponenten sind bekannt und erhältlich. Auch wenn die vorliegende Erfindung hauptsächlich am Beispiel von Forstarbeiten erläutert wird, ist sie gleichwohl auch in zahlreichen anderen Umgebungen einsetzbar. Beispielsweise kann es erwünscht sein, den Zutritt von Personen auf Baustellen zu verhindern oder zu erfassen. Ebenfalls kann es nützlich sein, jegliche andere Sicherheitsbereiche mit dem Warnsystem auszustatten, beispielsweise im Gesundheitswesen.

Bei bevorzugten Ausführungsformen ist vorgesehen, dass die Zentraleinheit ein Mobiltelefon ist oder mit einem Mobiltelefon koppelbar ist. Im Hinblick auf die Kommunikation der Zentraleinheit mit einer Bluetooth-Kommunikationseinrichtung eines Gehörschutzes liegen die Vorteile auf der Hand, da Mobiltelefone ohne weiteres für die Bluetooth-Kommunikation eingesetzt werden können.

Ebenfalls ist es nützlich, dass das Mobiltelefon mit einer Anwendung ausgestattet ist, die auf einer Anzeige des Mobiltelefons angibt, dass eine Bewegung eines Objekts in der Umgebung der Hinweiszeicheneinheit erfasst wurde. Die Anwendung (eine App) auf dem Mobiletelefon zeigt somit sämtliche Vorgänge im Sperrgebiet an, und die Vorgänge können auch gespeichert werden, um so später nachvollziehen zu können, was im Sperrgebiet zu welchen Zeitpunkten geschehen ist.

Gemäß einer weiteren nützlichen Ausführungsform ist vorgesehen, dass mehrere Hinweiszeicheneinheiten vorgesehen sind und dass die an der Zentraleinheit ausgegebenen Hinweise in ihrer Art davon abhängen, welche Hinweiszeicheneinheit ein Signal gesendet hat. Besonders bei großen Sperrgebieten bietet dies entscheidende Vorteile. Der Nutzer der Zentraleinheit weiß auf dieser Grundlage, von wo sich eine Person nähert, so dass er entsprechende Maßnahme ergreifen kann.

Weiterhin, ist es nützlich, dass die Hinweiszeicheneinheit ein Erkennungsmodul umfasst, welches geeignet ist, mindestens eine Eigenschaft des Objekts zu erfassen. Die Eigenschaft des Objekts kann beispielsweise eine Berechtigung sein, in das Sperrgebiet einzutreten. Zum Beispiel kann ein Forstarbeiter mit einem RFID-Chip ausgestattet werden, der von dem Erkennungsmodul in der Hinweiszeicheneinheit registriert wird. Ein Alarm kann dann unterdrückt werden, denn es ist davon auszugehen, dass der über den RFID-Chip ausgewiesene Forstarbeiter weiß, wie er sich in dem Sperrgebiet zu bewegen und zu verhalten hat. Auch wenn es nicht zu einem Alarm kommt, kann allerdings dennoch vorgesehen sein, dass ein Signal an die Zentraleinheit gesendet wird. Auf der Anzeige eines Mobiltelefons wird dann etwa nicht mehr zu lesen sein "Person in Sperrgebiet" sondern "Berechtigte Person in Sperrgebiet". Der Nutzer der Zentraleinheit hat dann nichts weiteres zu veranlassen. Das Erkennungsmodul kann auch eine Vorrichtung zur Gesichtserkennung umfassen, so dass tatsächlich erkannt werden kann, dass es sich möglicherweise um eine berechtigte Person handelt, die das Sperrgebiet betritt. Umgekehrt können auch bestimmte Personen eine "Sonderbehandlung" erfahren. Will man an der Zentraleinheit darauf aufmerksam gemacht werden, dass bestimmte Personen das Sperrgebiet betreten, so können die Gesichtserkennungsmerkmale dieser Personen zu speziellen Meldungen an der Zentraleinheit führen, beispielsweise "Förster Meier betritt Sperrgebiet". Ebenfalls kann das Erkennungsmodul eine Körpertemperaturerfassungseinrichtung sein oder umfassen. Somit kann die Hinweiszeicheneinheit auf Personen mit normaler Körpertemperatur anders reagieren als auf Personen mit erhöhter Körpertemperatur. Dies kann dem Infektionsschutz dienen, nämlich wenn man vermeiden will, dass infizierte Personen, die häufig eine erhöhte Körpertemperatur haben, in ein Sperrgebiet eintreten. Bei Personen mit normaler Körpertemperatur kann beispielsweise unterdrückt werden, dass eine Meldung an der Zentraleinheit ausgegeben wird. Oder an der Zentraleinheit wird eine Meldung der Art "Nicht infizierte Person betritt Sperrgebiet" ausgegeben. Hat hingegen die Person eine erhöhte Körpertemperatur, so kann an der Zentraleinheit eine Meldung der Art "Potentiell infizierte Person betritt Sperrgebiet" ausgegeben werden. Bei Personen mit normaler Körpertemperatur kann möglicherweise auf eine Ausgabe optischer und/oder akustischer Signale an der Hinweiszeicheneinheit verzichtet werden. Bei Personen mit erhöhter Körpertemperatur kann eine solche Signalausgabe an der Hinweiszeicheneinheit hingegen erfolgen. Es kann aber auch sinnvoll sein, im Falle potentiell infizierter Personen eine Ausgabe von Signalen an der Hinweiszeicheneinheit nicht stattfinden zu lassen, insbesondere aus Gründen des Datenschutzes. Das Erkennungsmodul der Hinweiszeicheneinheit kann auch geeignet sein, mit einer Anwendung auf einem Mobiltelefon oder mit einer separaten Vorrichtung zusammenzuwirken, die die Person, welche sich der Hinweiszeicheneinheit nähert, trägt. Durch die Anwendung oder die Vorrichtung kann zum Beispiel gespeichert sein, ob sich die betreffende Person in der Nähe von anderen Personen befand, über die bekannt ist, dass sie infiziert sind. Auf dieser Grundlage können wiederum unterschiedliche Reaktionen erfolgen. Wie bei der Erfassung der Körpertemperatur können unterschiedliche Meldungen an der Zentraleinheit ausgegeben werden. Ebenfalls können wie bei der Erfassung der Körpertemperatur unterschiedliche oder keine Signale an der Hinweiszeicheneinheit ausgegeben werden.

Es kann vorgesehen sein, dass die Hinweiszeicheneinheit eine Kamera umfasst. Auf diese Weise kann aufgezeichnet werden, was in der Umgebung der Hinweiszeicheneinheit geschieht. Auch kann die Kamera als Erkennungsmodul dienen, indem optische Informationen Auskunft darüber erteilen, ob eine Person in der Umgebung des Erkennungsmoduls berechtigt ist, das Sperrgebiet zu betreten. Weitere Anwendungen der Kamera betreffen andere Probleme, die in Sperrgebieten bestehen. Die Arbeiten im Forst oder auch an Baustellen dauern häufig mehrere Tage, mehrere Wochen oder mehrere Monate. Natürlich ist es unmöglich, bei ruhender Arbeit stets sämtliche Werkzeuge und Maschinen von den Orten zu entfernen, so dass diese unbeaufsichtigt an den Arbeitsstätten gelassen werden. Bringt man eine Hinweiszeicheneinheit in die Nähe der Werkzeuge und Maschinen, so kann mittels der Kamera erfasst werden, ob Diebstähle oder Vandalismus erfolgen. Bei einer solchen Kamera kann es sich auch - alternativ oder zusätzlich - um eine Wärmebildkamera handeln. Damit kann das System auch im Dunkeln arbeiten. Eine Wärmebildkamera hat ferner noch den Vorteil, dass das Warnsystem dann im Gesundheitswesen besonders nützlich einsetzbar ist. Denkt man beispielsweise daran, dass es im Zusammenhang mit Epidemien unbedingt vermieden werden soll, infizierten Personen einen Zutritt in ein bestimmtes abgesperrtes Gebiet zu ermöglichen, so kann eine Wärmekamera darüber Aufschluss geben, ob eine Person eventuell eine erhöhte Körpertemperatur oder Fieber hat. Reagierend darauf können besondere Maßnahmen ergriffen werden.

In diesem Zusammenhang ist es besonders nützlich, dass die Hinweiszeicheneinheit einen GPS-Empfänger umfasst. Ein GPS-Empfänger kann in dem Moment aktiviert werden, wenn über die Kamera ungewöhnliche Vorgänge registriert werden, wobei dann einem Nutzer auch über beispielsweise sein Mobiltelefon mitgeteilt werden kann, an welchem Ort die ungewöhnlichen und möglicherweise noch zu verhindernden Ereignisse stattfinden. Ein GPS-System ist insbesondere im Hinblick auf eine Alarmierung von Ersthelfern nützlich, da dieses die Ortung bei Unfällen erheblich erleichtert oder erst ermöglicht. Das GPS-System kann ein reines Satellitensystem sein. Ebenfalls können bodengestützte GPS-Signale verwendet werden.

Weiterhin ist das erfindungsgemäße Warnsystem besonders dadurch vorteilhaft ausgebildet, dass die Hinweiszeicheneinheit ein Dreibein und ein Rohr umfasst, wobei das Rohr für die Befestigung eines Hinweisschildes geeignet ist und wobei in dem Rohr ein flexibles Hinweistransparent aufnehmbar ist. In verschiedenen Ländern gibt es verschiedene Vorschriften für die Absperrung von Sperrgebieten, insbesondere von forstlichen Sperrgebieten. Während es beispielsweise in Österreich üblich ist, Schilder zu verwenden, werden in Deutschland flexible Transparente genutzt. Das erfindungsgemäße Warnsystem bietet beides, indem an dem Rohr ein Schild angebracht oder anbringbar ist, während im Rohr ein flexibles Hinweistransparent stets vorhanden ist, welches zur Kennzeichnung der Grenze des Sperrgebietes aufgespannt werden kann. Je nach den aktuellen Vorschriften beziehungsweise Vorschriftsänderungen kann das erfindungsgemäße Warnsystem in flexibler Weise weitergebildet werden. Es ist immer nützlich einsetzbar, wenn Personen in Sperrgebiete eintreten und diesbezüglich gewarnt und/oder erfasst werden sollen.

Die Erfindung wird nun mit Bezug auf die begleitenden Zeichnungen beispielhaft erläutert.
- Figur 1: zeigt eine Draufsicht auf einen Wald mit einem Sperrgebiet und einem erfindungsgemäßen Warnsystem;
- Figur 2: zeigt eine Ausstattung eines Nutzers des Warnsystems;
- Figur 3: zeigt schematisch den funktionellen Aufbau einer Hinweiszeicheneinheit;
- Figur 4: zeigt schematisch die baulichen Eigenschaften einer Hinweiszeicheneinheit.

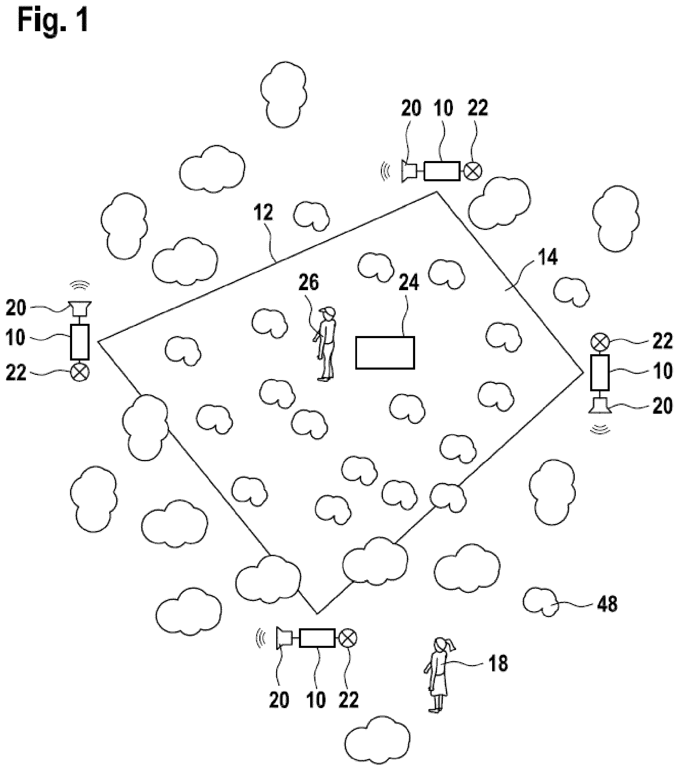

Figur 1 zeigt eine Draufsicht auf einen Wald mit einem Sperrgebiet und einem erfindungsgemäßen Warnsystem. Es ist ein Waldstück mit zahlreichen Bäumen 48 dargestellt. Ein Teil dieses Waldstückes ist als Sperrgebiet 14 ausgewiesen, wobei das Sperrgebiet 14 von einer Grenze 12 umgeben ist. An dieser Grenze 12 oder in der Nähe dieser Grenze 12 sind mehrere Hinweiszeicheneinheiten 10 angeordnet. Im vorliegenden Beispiel stehen die Hinweiszeicheneinheiten an Ecken der Grenze 12. Dies ist jedoch nicht zwingend. Ebenfalls ist es möglich, dass zusätzlich an den geraden Stücken der Grenze 12 Hinweiszeicheneinheiten aufgebaut sind. Ferner müssen an den Ecken des Sperrgebiets 14 nicht notwendigerweise Hinweiszeicheneinheiten angeordnet sein. Wichtig ist, dass, gemessen an der Länge der Grenze 12, ausreichend viele Hinweiszeicheneinheiten 10 angeordnet sind. Im vorliegenden Beispiel hat jede Hinweiszeicheneinheit 10 eine Signalvorrichtung 20 zur Ausgabe eines akustischen Signals, beispielsweise ein Lautsprecher, und eine Signalvorrichtung 22 zur Ausgabe eines optischen Signals, beispielsweise eine LED. Es ist nicht notwendig, dass sowohl eine akustische als auch eine optische Signalvorrichtung vorgesehen sind. Die Hinweiszeicheneinheiten 10 können auch mit einer der genannten Signalvorrichtungen auskommen. Innerhalb des Sperrgebiets 14 befindet sich der Nutzer 26 einer Zentraleinheit 24 sowie die Zentraleinheit selber. Sobald sich ein Objekt 18, das heißt insbesondere eine Person, einer Hinweiszeicheneinheit 10 nähert, gibt diese Hinweiszeicheneinheit 10 ein akustisches und/oder optisches Signal aus. Gleichzeitig wird ein Signal an die Zentraleinheit 24 übermittelt, beispielsweise im Langwellenbereich. Der Nutzer 26 der Zentraleinheit 24 wird auf diese Weise informiert, dass sich ein Objekt 18 dem Sperrgebiet nähert, die Grenze 12 des Sperrgebiets 14 gerade überschreitet oder bereits überschritten hat. Der Hinweis, der dem Nutzer 26 der Zentraleinheit 24 gegeben wird, kann die Information darüber enthalten, ob sich hinter dem Objekt 18 ein Objekt verbirgt, dass für den Eintritt in das Sperrgebiet 14 berechtigt oder unberechtigt ist. Ferner kann der Nutzer 26 der Zentraleinheit 24 darüber informiert werden, welche der Hinweiszeicheneinheiten 10 das Objekt 18 erfasst hat.

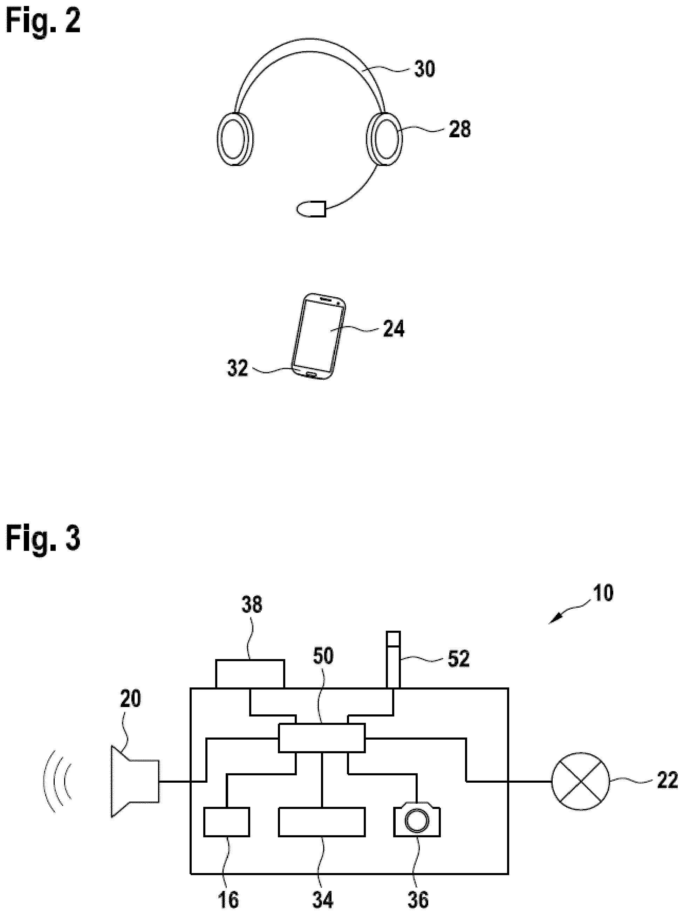

Figur 2 zeigt eine Ausstattung eines Nutzers des Warnsystems. In diesem bevorzugten Fall ist die Zentraleinheit 24 ein handelsübliches Mobiltelefon 32, welches bluetoothfähig ist. Der Nutzer 26 der Zentraleinheit 24 beziehungsweise des Mobiltelefons 32 trägt einen Gehörschutz 30, welcher eine Kommunikationseinheit 28 aufweist. Auch diese Kommunikationseinheit 28 ist vorzugsweise bluetoothfähig. Auf diese Weise kann das Mobiltelefon 32 dem Nutzer 26, der den Gehörschutz 30 trägt, ein akustisches Signal oder eine akustische Nachricht über das Ansprechen einer der Hinweiszeicheneinheiten liefern. Gleichzeitig oder alternativ kann auf der Anzeige des Mobiltelefons 32 Information angezeigt werden, die detaillierter angibt, was gerade passiert oder was irgendwann passiert ist.

Figur 3 zeigt schematisch den funktionellen Aufbau einer Hinweiszeicheneinheit. Es ist eine Hinweiszeicheneinheit 10 mit ihren funktionellen Hauptkomponenten dargestellt. Eine zentrale Steuerung 50 ist mit einer akustischen Signalvorrichtung 20 und einer optischen Signalvorrichtung 22 gekoppelt. Ferner ist ein Bewegungssensor 16 zum Erfassen eines Objekts in der Umgebung der Hinweiszeicheneinheit 10 mit der Steuerung verbunden. Als weitere Komponente enthält die Hinweiszeicheneinheit 10 ein Erkennungsmodul 34, welches in der Lage ist, Objekte anhand derer Eigenschaften zu unterscheiden, also beispielsweise ein Objekt, welchem der Eintritt in das Sperrgebiet gestattet ist, von einem solchen zu unterscheiden, dass nicht in das Sperrgebiet eintreten darf. Die Hinweiszeicheneinheit (10) kann auch eine Kamera 36 enthalten, welche ebenfalls mit der Steuerung 50 verbunden ist. Eine weitere Komponente, die mit der Steuerung 50 im Zusammenhang mit der Hinweiszeicheneinheit 10 verbunden sein kann, ist ein GPS-Sensor 38. Über diesen kann stets die Position der Hinweiszeicheneinheit 10 ermittelt werden. Die Steuerung 50 steht weiterhin mit einem Sender 52 in Verbindung. Über diesen Sender 52 kommuniziert die Hinweiszeicheneinheit mit der Zentraleinheit. Neben dem Sender 52 kann auch ein Empfänger vorgesehen sein, so dass beispielsweise durch die Zentraleinheit die akustische und/oder optische Signalgebung der Hinweiszeicheneinheit 10 gestoppt oder anderweitig unterbunden werden kann. Der Empfänger ist hier nicht dargestellt. Anstelle eines Senders 52 und eines Empfängers kann auch ein Transceiver vorgesehen sein, der beide Aufgaben, also sowohl das Senden als auch das Empfangen übernimmt.

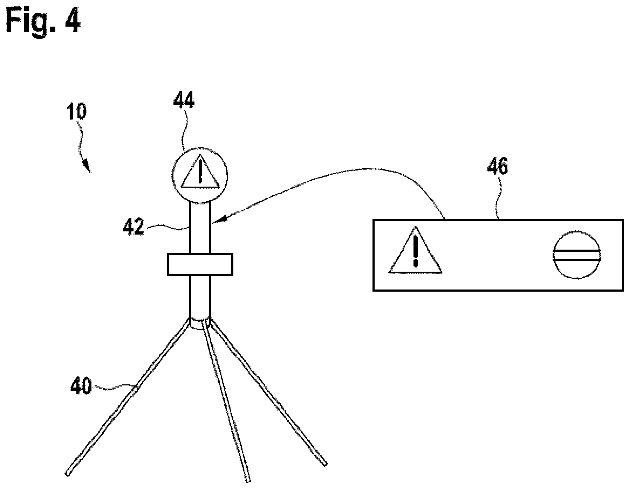

Figur 4 zeigt schematisch die baulichen Eigenschaften einer Hinweiszeicheneinheit. Ein Dreibein 40 trägt ein Rohr 42, an welchem Hinweisschilder befestigt sein können, beispielsweise das Hinweisschild 44. Mittels der Hinweisschilder werden Personen, die sich der Hinweiszeicheneinheit 10 nähern, davor gewarnt, in ein Sperrgebiet einzutreten. Innerhalb des Rohrs 42 kann ein Transparent 46 gelagert werden, welches ebenfalls mithilfe der Hinweiszeicheneinheit 10 aufgespannt werden kann. Somit kann ein noch großflächigerer Hinweis auf ein Sperrgebiet gegeben werden.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 10: Hinweiszeicheneinheit
- 12: Grenze
- 14: Sperrgebiet
- 16: Bewegungssensor
- 18: Objekte
- 20: Optische Signalvorrichtung
- 22: Akustische Signalvorrichtung
- 24: Zentraleinheit
- 26: Nutzer
- 28: Kommunikationseinheit
- 30: Gehörschutz
- 32: Mobiltelefon
- 34: Erkennungsmodul
- 36: Kamera
- 38: GPS-Empfänger
- 40: Dreibein
- 42: Rohr
- 44: Hinweisschild
- 46: Hinweistransparent

## Patentansprüche

1. Warnsystem mit
- mindestens einer mobilen Hinweiszeicheneinheit (10), welche optisch eine Grenze (12) zu einem Sperrgebiet (14) kennzeichnet, wobei die Hinweiszeicheneinheit mindestens einen Bewegungssensor (16) aufweist, welcher Bewegungen von Objekten (18) in der Umgebung der Hinweiszeicheneinheit (10) erfasst, und wobei die Hinweiszeicheneinheit (10) mindestens eine Signalvorrichtung (20, 22) aufweist, welche geeignet ist, ein optisches und/oder akustisches Signal auszugeben, wenn der Bewegungssensor (16) eine Bewegung eines Objekts (18) in der Umgebung der Hinweiszeicheneinheit (10) erfasst hat, und
- einer Zentraleinheit (24), die geeignet ist, ein über Funk von der mindestens einen Hinweiszeicheneinheit (10) gesendetes Signal zu empfangen und hierauf einen Hinweis an einen Nutzer (26) der Zentraleinheit auszugeben,
- wobei durch die Hinweiszeicheneinheit (10) erfassbar ist, ob das Objekt (18) die Grenze (12) zu dem Sperrgebiet (14) überschreitet oder überschritten hat, und wobei das Signal in Abhängigkeit davon veränderbar ist, ob das Objekt (18) die Grenze (12) zu dem Sperrgebiet (14) überschreitet oder überschritten hat.

2. Warnsystem nach Anspruch 1, **dadurch gekennzeichnet, dass** die Zentraleinheit (24) mit einer Kommunikationseinheit (28) koppelbar ist, welche in einem Gehörschutz (30) des Nutzers (26) angeordnet ist, so dass die Hinweise über den Gehörschutz (30) an den Nutzer (26) ausgegeben werden können.

3. Warnsystem nach einem der vorhergehenden Ansprüche, **dadurch gekennzeichnet, dass** die Zentraleinheit (24) ein Mobiltelefon (32) ist oder mit einem Mobiltelefon koppelbar ist.

4. Warnsystem nach Anspruch 3, **dadurch gekennzeichnet, dass** das Mobiltelefon mit einer Anwendung ausgestattet ist, die auf einer Anzeige des Mobiltelefons (32) angibt, dass eine Bewegung eines Objekts (18) in der Umgebung der Hinweiszeicheneinheit (10) erfasst wurde.

5. Warnsystem nach einem der vorhergehenden Ansprüche, **dadurch gekennzeichnet, dass** mehrere Hinweiszeicheneinheiten (10) vorgesehen sind und dass die an der Zentraleinheit (24) ausgegebenen Hinweise in ihrer Art davon abhängen, welche Hinweiszeicheneinheit (10) ein Signal gesendet hat.

6. Warnsystem nach einem der vorhergehenden Ansprüche, **dadurch gekennzeichnet, dass** die Hinweiszeicheneinheit (10) ein Erkennungsmodul (34) umfasst, welches geeignet ist, mindestens eine Eigenschaft des Objekts (18) zu erfassen.

7. Warnsystem nach einem der vorhergehenden Ansprüche, **dadurch gekennzeichnet, dass** die Hinweiszeicheneinheit (10) eine Kamera (36) umfasst.

8. Warnsystem nach einem der vorhergehenden Ansprüche, **dadurch gekennzeichnet, dass** die Hinweiszeicheneinheit (10) einen GPS-Empfänger (38) umfasst.

9. Warnsystem nach einem der vorhergehenden Ansprüche, **dadurch gekennzeichnet, dass** die Hinweiszeicheneinheit (10) ein Dreibein (40) und ein Rohr (42) umfasst, wobei das Rohr für die Befestigung eines Hinweisschildes (44) geeignet ist und wobei in dem Rohr (42) ein flexibles Hinweistransparent (46) aufnehmbar ist.

## Claims

1. A warning system comprising
- at least one mobile notification unit (10), which optically identifies a boundary (12) of a restricted area (14), wherein the notification unit has at least one motion sensor (16) which detects movements of objects (18) in the environment of the notification unit (10), and wherein the notification unit (10) has at least one signal device (20, 22) which is suitable for outputting an optical and/or acoustic signal if the motion sensor (16) has detected a movement of an object (18) in the environment of the notification unit (10), and
- a central unit (24) which is suitable for receiving a signal sent via radio from the at least one notification unit (10) and to then output a notification to a user (26) of the central unit;
- wherein the notification unit (10) is able to detect whether the object (18) is crossing or has crossed the boundary (12) of the restricted area (14), and wherein the signal is changeable depending on whether the object (18) is crossing or has crossed the boundary (12) of the restricted area (14).

2. The warning system according to claim 1, **characterized in that** the central unit (24) is couplable to a communication unit (28) disposed within a hearing protection (30) of the user (26) so that the notifications can be output via the hearing protection (30) to the user (26).

3. The warning system according to any of the preceding claims, **characterized in that** the central unit (24) is a cellular phone (32) or is couplable to a cellular phone.

4. The warning system according to claim 3, **characterized in that** the cellular phone is equipped with an application indicating on a display of the cellular phone (32) that a movement of an object (18) has been detected in the environment of the notification unit (10).

5. The warning system according to any of the preceding claims, **characterized in that** several notification units (10) are provided and that the type of the notifications output at the central unit (24) depends on which notification unit (10) has sent a signal.

6. The warning system according to any of the preceding claims, **characterized in that** the notification unit (10) comprises an identification module (34) which is suitable for detecting at least one property of the object (18).

7. The warning system according to any of the preceding claims, **characterized in that** the notification unit (10) comprises a camera (36).

8. The warning system according to any of the preceding claims, **characterized in that** the notification unit (10) comprises a GPS receiver (38).

9. The warning system according to any of the preceding claims, **characterized in that** the notification unit (10) comprises a tripod (40) and a tube (42), wherein the tube is suitable for fixing a notification sign (44) and wherein, within the tube (42), a flexible notification banner (46) is receivable.

## Revendications

1. Système d'avertissement comprenant
- au moins une unité de notification mobile (10) identifiant optiquement une limite (12) d'une zone limitée (14), l'unité de notification présentant au moins un capteur de mouvement (16) détectant des mouvements d'objets (18) dans l'environnement de l'unité de notification (10), et l'unité de notification (10) présentant au moins un dispositif de signalisation (20, 22) approprié pour émettre un signal optique et/ou acoustique si le capteur de mouvement (16) a détecté un mouvement d'un objet (18) dans l'environnement de l'unité de notification (10), et
- une unité centrale (24) appropriée pour recevoir un signal envoyé par radio à partir de l'au moins une unité de notification (10) et pour envoyer ensuite une notification à un utilisateur (26) de l'unité centrale,
- l'unité de notification (10) permettant de détecter si l'objet (18) franchit ou a franchi la limite (12) de la zone limitée (14), et le signal étant modifiable en fonction du fait que l'objet (18) franchit ou a franchi la limite (12) de la zone limitée (14).

2. Système d'avertissement selon la revendication 1, **caractérisé en ce que** l'unité centrale (24) est couplable à une unité de communication (28) qui est disposée dans une protection auditive (30) de l'utilisateur (26), de sorte que les notifications sur la protection auditive (30) peuvent être envoyées à l'utilisateur (26).

3. Système d'avertissement selon l'une des revendications précédentes, **caractérisé en ce que** l'unité centrale (24) est un téléphone mobile (32) ou est couplable à un téléphone mobile.

4. Système d'avertissement selon la revendication 3, **caractérisé en ce que** le téléphone mobile est équipé d'une application qui indique sur un affichage du téléphone mobile (32) qu'un mouvement d'un objet (18) a été détecté dans l'environnement de l'unité de notification (10).

5. Système d'avertissement selon l'une des revendications précédentes, caractérisé en ce plusieurs unités de notification (10) sont prévues et en ce que les notifications envoyées à l'unité centrale (24) dépendent dans leur nature de l'unité de notification (10) qui a envoyé un signal.

6. Système d'avertissement selon l'une des revendications précédentes, **caractérisé en ce que** l'unité de notification (10) comprend un module de reconnaissance (34) approprié pour détecter au moins une propriété de l'objet (18).

7. Système d'avertissement selon l'une des revendications précédentes, **caractérisé en ce que** l'unité de notification (10) comprend une caméra (36).

8. Système d'avertissement selon l'une des revendications précédentes, **caractérisé en ce que** l'unité de notification (10) comprend un récepteur GPS (38).

9. Système d'avertissement selon l'une des revendications précédentes, **caractérisé en ce que** l'unité de notification (10) comprend un trépied (40) et un tube (42), le tube étant approprié pour fixer un panneau de notification (44) et un transparent de notification flexible (46) étant logeable dans le tube (42).
